(19) Europäisches Patentamt
European Patent Office
Office européen des brevets

(11) EP 4 734 325 A1

(12) **EUROPEAN PATENT APPLICATION**

(43) Date of publication:
**29.04.2026 Bulletin 2026/18**

(21) Application number: **25211051.5**

(22) Date of filing: **24.10.2025**

(51) International Patent Classification (IPC):
**H02J 7/00** (2026.01)

(52) Cooperative Patent Classification (CPC):
**H02J 7/54;** H02J 7/82; H02J 2207/50

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **28.10.2024 LU 508695**

(71) Applicant: **Skeleton Technologies GmbH**
**04420 Markranstädt (DE)**

(72) Inventor: **Trummal, Tarmo**
**04420 Markranstädt (DE)**

(74) Representative: **KASTEL Patentanwälte PartG mbB**
**St.-Cajetan-Straße 41**
**81669 München (DE)**

(54) **A COMPUTER-IMPLEMENTED METHOD FOR DISCHARGING ENERGY STORAGE CELLS**

(57) In order to allow the improvement of energy storage cells, the invention proposes a computer-implemented method for discharging energy storage cells (14) of an energy storage system (10), the method comprising : a) determining a system charge, Sys_charge_As, to be discharged from the energy storage cells (14) based on a configuration of the energy storage system (10); b) determining a balancing map based on predefined criteria, wherein the balancing map includes an entry for each energy storage cell (14), and each energy storage cell (14) is associated with at least a balancing flag; c) determining, whether the energy storage system (10) is ready to discharge; and d) discharging the energy storage system (10), if the energy storage system (10) is determined to be ready for discharge.

FIG 1

EP 4 734 325 A1

**Description**

The invention relates to a computer-implemented method for discharging energy storage cells of an energy storage system.

Energy storage systems that include multiple energy storage cells typically require some sort of management of cell voltages. This may have different causes, such as variations in manufacturing or - over time - degradation of the cells depending on environmental conditions or usage conditions, for example.

Energy storage cells as described herein may be classified into three varieties: batteries, capacitors and ultracapacitors (sometimes also called supercapacitors).

The term "battery" as used herein is an energy storage cell that stores electrical energy exclusively by electrochemical redox reaction. This typically includes primary batteries that can only be discharged. However, as used herein, the term "battery" exclusively means secondary battery, i.e., a battery that may be charged and discharged.

The term "capacitor" as used herein is an energy storage cell that stores electrical energy electrostatically.

The term "ultracapacitor" (sometimes also called supercapacitor) as used herein is a special kind of capacitor and may be further distinguished into a double-layer capacitor (DLC) that stores energy electrostatically using a Helmholtz double layer, a pseudocapacitor that stores electrical energy electrochemically by Faradaic electron charge-transfer such as intercalation or electrosorption, or a hybrid capacitor that uses both mechanisms of the DLC and the pseudocapacitor.

US 2022 / 0 149 447 A1 discloses a method for reasonably adjusting an end-of-discharge voltage of a lithium battery with attenuation of a battery life. The method includes: acquiring an end-of-charge voltage, an end-of-discharge voltage and a rated capacity based on a basic parameter table for a lithium battery, then setting a safety end-of-charge voltage and a safety end-of-discharge voltage to obtain an initial safety discharge capacity, and finally setting a preset discharge capacity of the battery; using an Ampere-hour integration method to estimate a discharged power, taking the preset discharge capacity as a discharge standard, and stopping discharge when the discharged power reaches the preset discharge capacity; and the safety discharge capacity being gradually less than the preset discharge capacity within a battery life cycle, and the battery stopping discharge when the voltage reaches the safety end-of-discharge voltage. By controlling the discharge capacity to be unchanged, the present invention ensures stably outputting power in the case that the battery capacity attenuates, so that a user feels that the endurance mileage of an electric vehicle is stably unchanged within a certain period.

US 2021 / 0 013 729 A1 discloses a battery charge/discharge management method and system. A lithium battery core and a DC/DC converter are embedded in the battery to generate input or output I/O voltage and current. When the lithium battery core is in the working voltage range, the battery charge/discharge management method comprises the following modes: a1. the overvoltage protection mode is adopted when the charging operation is higher than the preset high charging voltage, the I/O voltage cannot be fed in the battery; a2. it is charging mode when the charging operation voltage is lower than the preset high charging voltage and higher than the minimum rechargeable voltage, the I/O voltage can charge the lithium battery core in the battery; a3. it is protection mode when the I/O voltage is lower than the minimum rechargeable voltage and higher than the maximum dischargeable voltage, no charging/discharging operation; a4. the battery can discharge when the I/O voltage is lower than the maximum dischargeable voltage and higher than the minimum dischargeable voltage, the I/O voltage comprises the output internal reference voltage of DC/DC converter and the electric quantity indication voltage of product scaled down according to the actual voltage of lithium battery core, and the I/O voltage corresponds to dynamic load line characteristic; a5. the I/O voltage load line offset is enlarged when the actual voltage of lithium battery core is lower than the preset low battery voltage; a6. it is negative voltage protection mode when the I/O voltage is lower than 0V, the battery does not perform charging/discharging operation, and I/O terminal to ground short circuit provides a negative current loop; the present invention can provide better electric quantity management and measurement.

EP 2 437 344 A1 discloses a rechargeable battery system that controls charge/discharge of a lithium ion rechargeable battery, and includes: an internal resistance detection means that detects or estimates an internal resistance value indicating an internal resistance at the lithium ion rechargeable battery; and a discharge control means that executes control so as to set a discharge suspension period while the lithium ion rechargeable battery is discharged if the internal resistance value detected via the internal resistance detection means during discharge of the lithium ion rechargeable battery exceeds a first threshold value.

US 9 641 006 B2 discloses a battery pack with a plurality of battery cells, a measurement unit, and a battery control unit. The plurality of battery cells are connected in series to each other. The measurement unit measures voltages of the battery cells. The battery control unit controls discharge of the battery cells on the basis of the voltages measured by the measurement unit. In addition, when the battery cells perform the discharge, the battery control unit specifies a minimum voltage cell in which the voltage is lowest on the basis of the voltages measured by the measurement unit. Further, before the minimum voltage cell is over-discharged, the battery control unit outputs a first signal for reducing a discharge current in the discharge.

US 5 789 903 A discloses a method and apparatus for processing rechargeable batteries include using a processor arranged to monitor the voltage of a battery when it is being discharged and to terminate the discharge after detecting that the rate of change of the voltage has passed through a termination pattern indicative of exhaustion of a cell of the battery. The determination is made by monitoring the voltage during discharge and detecting when the voltage curve thereof exhibits first convexity followed by concavity. The degree of convexity and concavity, and the time interval within which they must occur, are determined by the processor. The discharge is also terminated if the voltage reaches a predetermined voltage or if, after the termination pattern is detected, and before the voltage has reached a predetermined voltage, a predetermined amount of charge is removed from the battery. The invention also envisages recharging the battery first at high rate until the amount of charge returned to the battery is no more than the charge removed from the battery before the discharge was terminated. The charge may then be continued at a lower rate until the battery is overcharged to a predetermined extent.

US 5 547 775 A discloses a circuit for preventing overcharge and overdischarge of secondary batteries. Overcharge detecting comparators and each having a hysteresis circuit are connected between positive and negative electrodes of series-connected secondary batteries, and overdischarge detecting comparators and each having a hysteresis circuit are connected also between the above electrodes. Transistors and a resistor are connected between the batteries for overflow of overcharge and balance of overdischarge. Upon detection of any overcharge by the comparator, the charge current is interrupted by a transistor, and simultaneously the overcharge overflow is discharged by the hysteresis circuit until the battery voltage is lowered to the hysteresis voltage. And after the discharge, the transistor is turned on to resume recharging the batteries. Meanwhile, upon detection of any overdischarge by the comparator, the discharge current is interrupted by a transistor. Thus the overcharge and the overdischarge can be balanced by the hysteresis circuits, respectively.

Reference is further made to EP 4 597 787 A2, which is equivalent to German unpublished patent application 10 2024 102 852.1, whose disclosure is incorporated herein by reference.

US 2018 / 0 366 959 A1 discloses a method and system for monitoring individual cell voltages of an energy storage system. The measured cell voltages are reported back to a central controller. Based on parameters such as the overall health of the system, this controller is adapted to decide which cells to balance, in which direction and for how long. Balancing is performed by cell monitoring and balancing units which can be implemented in hardware, i.e. as one or more circuits. The decision information from the controller is reported to the cell monitoring and balancing units as a command. The cell monitoring and balancing means executes the command, for example irrespective of the voltage or SoC of the cell connected to it.

US 2017 / 0 358 932 A1 discloses a method for balancing an energy storage system during which a capacitance of capacitive storage modules of a series circuit of capacitive storage modules is determined. The capacitive storage modules are connected to a balancing device to allow control of a charge of each of the capacitive storage modules via a flow of current between the balancing device and the capacitive storage modules. For each of the capacitive storage modules a module charge is determined from a voltage of the capacitive storage module and a predefined balancing voltage. A reference charge is determined from the module charges of the capacitive storage modules, and a balancing charge is determined for each of the capacitive storage modules from the reference charge and the module charge of the capacitive storage module. The charge of the capacitive storage modules is controlled by exchanging the balancing charge between the capacitive storage module and the balancing device.

It is the object of the invention to improve energy storage cells, preferably by reducing or avoiding electrode material degradation, wherein the improvements may mainly lie in the field of lifetime, equivalent series resistance (ESR), and/or usable capacity.

The object is achieved by the subject-matter of the independent claims. Preferred embodiments are subject-matter of the dependent claims.

The invention provides a computer-implemented method for discharging energy storage cells of an energy storage system, the method comprising:

a) determining a system charge to be discharged from the energy storage cells based on a configuration of the energy storage system;
b) determining a balancing map based on predefined criteria, wherein the balancing map includes an entry for each energy storage cell, and each energy storage cell is associated with at least a balancing flag;
c) determining, whether the energy storage system is ready to discharge; and
d) discharging the energy storage system, if the energy storage system is determined to be ready for discharge.

Preferably, in step a) determining the system charge to be discharged involves determining the system configuration by determining the number of series and parallel-connected modules. Typically there are predefined configurations that can be programmed into the controller and based on these configurations the correct system charge can be calculated.

Preferably, in step b) determining the balancing map involves determining a calculated cell voltage after discharge, Cell_VoltDchg_V, and a target cell voltage, Cell_VoltTarget_V, that is indicative of the voltage where each energy storage cell has stored the same amount of charge.

Preferably, in step b) a first criterion involves checking if a current cell voltage, Cell_Volt_V, is greater than a nominal cell voltage, Cell_VoltNom_V.

Preferably, when the first criterion is true, the balance flag is set to "true", and otherwise another criterion, is checked.

Preferably, in step b) a second criterion involves checking if the current cell voltage, Cell_Volt_V, is smaller than a cell minimum balancing voltage, Cell_VoltBalMin_V, that indicates the voltage below which a balancing of the energy storage cell 14 is technically not possible.

Preferably, when the second criterion is true, the balance flag is set to "false", and otherwise another criterion is checked.

Preferably, in step b) a third criterion involves checking if the current cell voltage, Cell_Volt_V, is greater than a cell voltage target Cell_VoltTarget_V.

Preferably, when the third criterion is true, the balance flag is set to "true", and otherwise another criterion is checked.

Preferably, in step b) a fourth criterion involves checking if any of the cell target voltage, Cell_VoltTarget_V, is above the current cell voltage, Cell_Volt_V, and if the calculated cell voltage after discharge, Cell_VoltDchg_V, of a maximum capacitance cell, Cell_NumOfCapMax, is greater than a predetermined threshold.

Preferably, a fifth criterion involves checking, if the respective energy storage cell is the maximum capacitance cell Cell_NumOfCapMax.

Preferably, the fifth criterion is checked if the fourth criterion is true, and otherwise another criterion is checked.

Preferably, in step b) a sixth criterion involves checking if the cell voltage after discharge, Cell_VoltDchg_V, is greater than a predetermined threshold.

Preferably, when the sixth criterion is true, the balance flag is set to "true", and otherwise another criterion is checked.

Preferably, in step b) a seventh criterion involves checking, if the minimum of the calculated cell voltages after discharge, Cell_VoltDchg_V, is below an allowed negative cell voltage, Cell_VoltNegAllowed_V, and if at least one of the energy storage cells is below the allowed negative cell voltage, Cell_VoltNegAllowed_V.

Preferably, in step d) discharging involves a passive balancing method using switched shunts, allowing each cell to be balanced separately according to the balancing map.

The invention provides an MCU comprising means to perform a previously described method.

The invention provides an energy storage module comprising a module MCU and a plurality of energy storage cells that are operated by the module MCU.

Preferably, the energy storage cells are chosen from a group consisting of supercapacitors and hybrid capacitors or are a combination thereof.

Preferably, each energy storage cell includes a switched shunt, that is allowing each cell to be balanced separately according to the balancing map.

The invention provides an energy storage system comprising a plurality of energy storage modules and a system MCU, wherein the system MCU and the respective module MCUs are in communication with each other, and wherein the energy storage cells are electrically connected in series or in parallel.

The invention provides a machine-readable data storage that includes instructions, that upon execution by a computer or microcontroller cause the computer or microcontroller to perform a previously described method, or that upon synthesizing in a programmable circuit chip, configure the circuit chip to perform a previously described method.

In some embodiments, the method avoids negative discharge (sometimes also called exhaustive discharge) from a supercapacitor or hybrid energy storage module. The negative discharge occurs, if and when the cell voltage drops below 0 volts.

Initially, the charge that is expected to be discharged through each cell during discharge mode is determined. Further a balancing requirement is calculated for each cell of the module based on some predefined and well-known criteria. Finally, it is determined, whether the system is ready to discharge or not by comparing the calculated minimum cell discharge voltage and the allowed negative cell voltage.

In some embodiments, the energy storage module has passive balancing. This includes individually switched shunts for each cell so that each cell can be balanced separately.

In some embodiments the energy storage module comprises supercapacitors, hybrid capacitors, and/or hybrid energy storage cells.

In some embodiments the method can avoid negative discharge which helps to decrease the electrode material degradation, thus helping to prolong the life of the cells.

In some embodiments the decomposition of the electrolyte can be mitigated. It is also possible to avoid or mitigate an increase in resistance, e.g., equivalent series resistance (ESR). In some embodiments it is possible to mitigate a decrease in usable capacity.

The goal of the discharge beyond 0 Volt (also called 0VMode) is to limit the negative voltage that the cells may experience after the system is discharged to 0 V, e.g., for maintenance. Here the system can be a single module or multiple modules that are connected in series or in parallel, the modules typically forming an energy storage rack in this case. The method generally has three steps:

Detecting the system configuration and determining the charge (typically in As) that will be discharged from each cell during the system discharge to 0 Volt.

Determining a balancing map based on balancing method criteria. The balancing map indicates which cells are balanced (discharged by switched shunts) according to the balancing criteria.

Determining whether the system is ready to be discharged.

Modules that are using the disclosed method include passive balancing with switched shunts. This allows each individual cell to be balanced separately. Typically, such modules have their energy storage cells connected in series. However, modules with parallel cells (parallel connection of cells) are possible. It should be noted that the ideas disclosed herein are also applicable to the parallel configuration. It is advantageous in this case to treat all parallel connected cells as if it was one cell with balancing circuitry.

A first step of the method is detection of system configuration and calculation of system charge ($Q_{sys}$) to be discharged from the cells. The microcontroller (MCU) calculates the $Q_{sys}$ based on the configuration of the system as the method is best performed when $Q_{sys}$ is calculated with great accuracy. This calculation is done with Eq. (1). If there are modules connected in parallel (terminals of modules are connected) the $Q_{sys}$ should be shared between the modules with Eq. (2).

$$Q_{sys} = C_{sys} \cdot V_{sys} \qquad (1)$$

$$Q_i = \frac{C_i}{\sum_{i=1}^{n} C_i} \cdot Q_{sys} \qquad (2)$$

where

$Q_{sys}$ - system charge to be discharged,
$C_{sys}$ - system capacitance,
$V_{sys}$ - system voltage,
$Q_i$ - $i$-th parallel module charge,
$C_i$ - $i$-th parallel module capacitance,
n - number of parallel modules.

A system of n parallel strings of m modules in series is designated as msnp, 2 parallel strings of 5 modules is designated 5s2p.

In this case the $Q_{sys}$ is calculated as a product of $C_{sys}$ and $V_{sys}$, that themselves are a sum of individual module parallel assemblies (PA). Using Eq. (2) $Q_{sys}$ is shared between modules in each parallel assembly. If the modules are connected only in series in the system, i.e. ms1p or ms for short, then $Q_i$ equals $Q_{sys}$.

Additionally average cell voltage and capacitance may be calculated from $C_{sys}$ and $V_{sys}$ based on the number m of series and n parallel connected cells in the system with Eq. (3) and Eq. (4).

$$C_{avg} = Q_{sys} \cdot \frac{N_s}{N_p} \qquad (3)$$

$$V_{avg} = \frac{V_{sys}}{N_s} \qquad (4)$$

where

$C_{avg}$ - average cell capacitance,

$V_{avg}$ - average cell voltage,
$N_s$ - number of cells connected in series in the system,
$N_p$ - number of cells in parallel in the system.

Based on the values calculated with Eq. (1) to Eq. (4) two input values are calculated for the balancing method:

- Cell_VoltDchg_V - calculated cell voltage after discharge,
- Cell_VoltTarget_V - cell voltage target, i.e. what is the cell voltage such that the cell is discharged to 0 V.

These two values are determined for each cell and form the basis of the balancing method. The aim is to minimize Cell_VoltDchg_V and the difference between Cell_Volt_V and Cell_VoltTarget_V to zero. There are multiple criteria to calculate the balancing map (Cell_BalActive) and the calculation is preferably done for each individually:

- Criterion 1 (C1) checks, if the cell voltage is above nominal voltage. If true, then Cell_BalActive is set to true (meaning the cell takes part in balancing), otherwise the method proceeds with the next criterion.

- C2 checks if the cell voltage is below the minimum balancing voltage (minimum cell voltage where it is possible to balance due to hardware constraints). If true, then Cell_BalActive is set to false (meaning the cell does not participate in balancing), otherwise the method proceeds with the next criterion.

- C3 checks if the cell voltage is above the target cell voltage. If true, then Cell_BalActive is set to true, otherwise the method proceeds with the next criterion.

- C4 and C5 check if any of the cell target voltage is above cell voltage and if the maximum capacitance cell Cell_VoltDchg_V is above zero. If C4 is true, then C5 sets Cell_BalActive only true for the maximum capacitance cell. This is done because the only way to increase cell voltages with passive balancing is to discharge some cells and with this specific balancing method, the maximum capacity cell will be discharged for this reason. If C4 is false, then the method proceeds with the next criterion.

- C6 checks if Cell_VoltDchg_V is above zero. If true, then Cell_BalActive is set to true. Otherwise the balancing method proceeds with the next criterion.

- C7 checks if the minimum of the Cell_VoltDchg_V is below the allowed negative cell voltage (Cell_VoltNegAllowed_V) and if some of the cells are also below Cell_VoltNegAllowed_V. If this criterion is true, then Cell_BalActive will be set like with weighted balancing but using Cell_VoltDchg_V instead of Cell_Volt_V.

After the balancing map is calculated for each cell then there will be a criterion for determining, whether the system is ready to be discharged. This may be done by comparing the minimum Cell_VoltDchg_V value to Cell_VoltNegAllowed_V. If minimum Cell_VoltDchg_V is larger than or equal to Cell_VoltNegAllowed_V then the system is ready to be discharged.

Embodiments of the invention are described in more detail with reference to the accompanying schematic drawings that are listed below

Fig. 1    depicts an embodiment of an energy storage system;
Fig. 2    depicts an embodiment of a method for discharging to 0 V;
Fig. 3    to
Fig. 5    depict simulation results of the method.

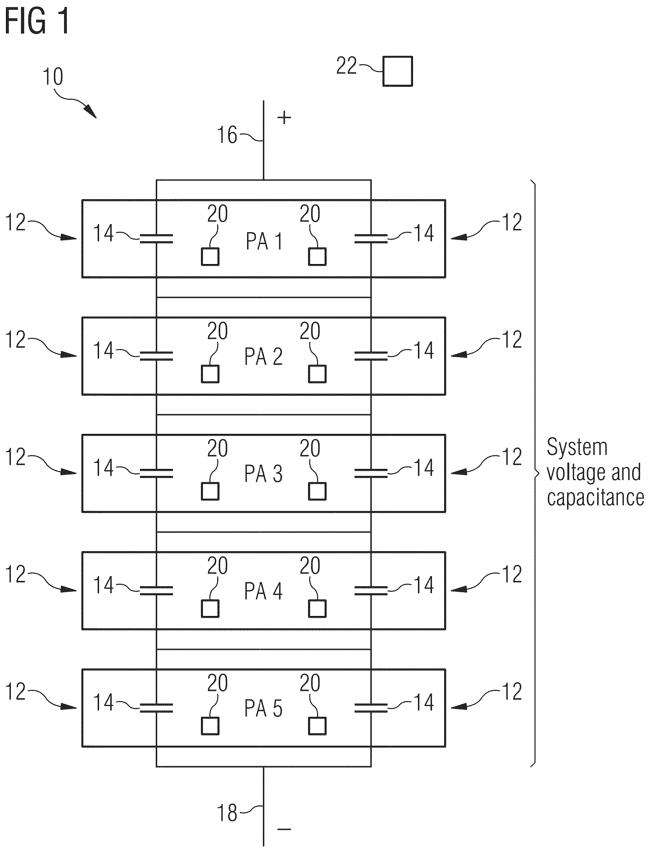

Referring to Fig. 1, an energy storage system 10 includes a plurality of energy storage modules 12. The energy storage modules 12 are organized in five parallel assemblies PA1 to PA5 of two energy storage modules 12, respectively. This is also designated as a 5s2p configuration. While the invention is explained with reference to this specific configuration, it should be noted that other configurations are possible. The configuration depends on the application and may involve fewer (at least one energy storage module 12) or more energy storage modules 12. Each energy storage module 12 includes a plurality of energy storage cells 14 that are typically connected in series within each energy storage module 12. The energy storage system 10 includes a positive terminal 16 and a negative terminal 18 for connecting other components.

Each energy storage cell 14 has a switchable shunt resistor for discharging the energy storage cell 14 for balancing. This is controlled by a module MCU 20 at the level of the energy storage module 12. Furthermore, the module MCU 20 is able to determine the individual cell voltages. The module MCU 20 may generate control signals that control the operation of the respective energy storage module 12. The module MCU 20 may also communicate with other module MCUs 20 and/or with a system MCU 22 at the level of the energy storage system 10. The system MCU 22 may issue control signals to or receive signals from the module MCU 20.

The energy storage system 10 may need regular maintenance or repairs following a fault condition, for example. For safety reasons, the energy storage system 10 is discharged to prevent electric shock on any human that may (accidentally) come into contact with any of the terminals 16, 18 or other electrical conductors.

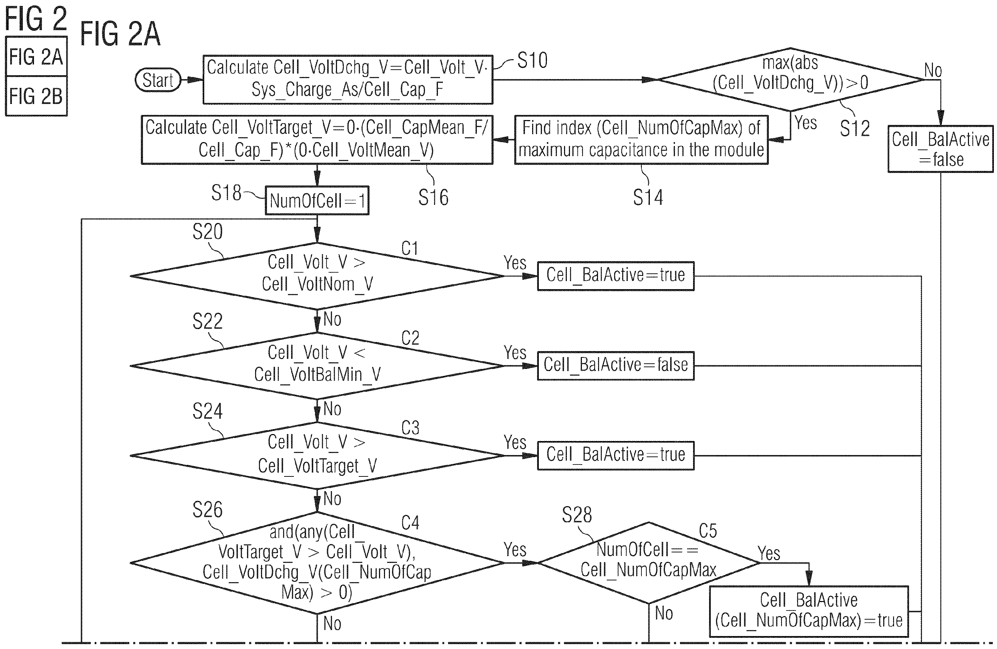

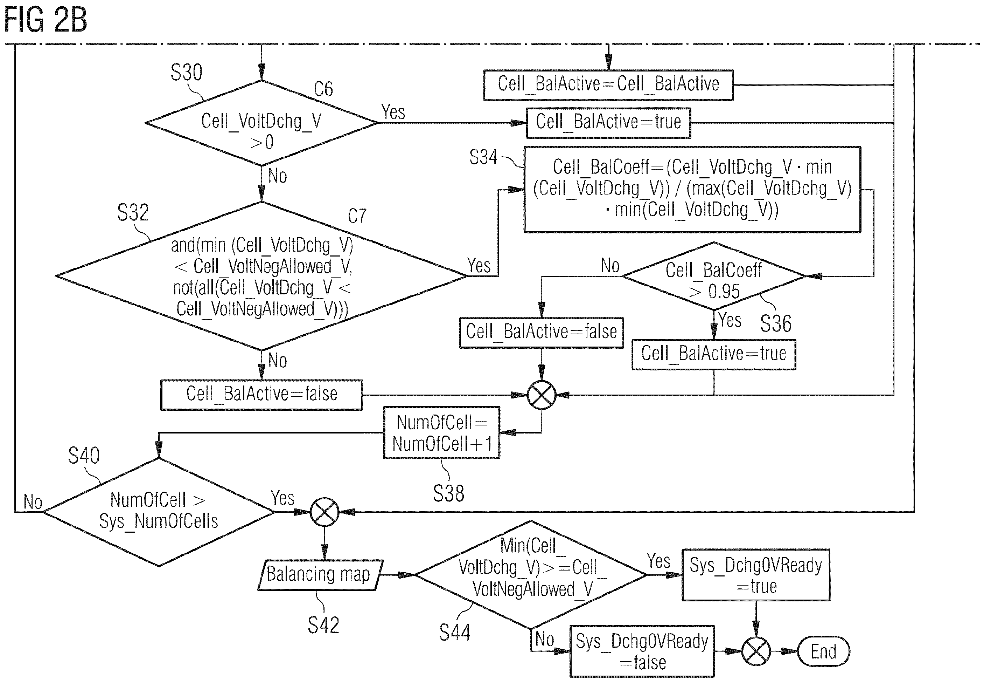

Referring to Fig. 2, a method for safely discharging the energy storage system 10 is described. The steps may be performed by the module MCU 20 of each module and the results reported to the system MCU 22. It is also possible that the steps are performed by MCUs 20, 22 or just by the system MCU 22 that takes over control over the module MCUs 20. In some embodiments it is possible that some steps are performed by the module MCU 20 and other steps are performed by the system MCU 22.

In step S10, a calculated cell voltage after discharge Cell_VoltDchg_V is calculated for each and every energy storage cell 14 by measuring the respective individual cell voltage and subtracting therefrom the system charge Sys_charge_As divided by the relevant cell capacitance Cell_Cap_F. This depends on the system configuration and is done using equations (1) and (2) above.

In step S12, the maximum of the modulus of the calculated cell voltages after discharge Cell_VoltDchg_V is determined. If the maximum is greater than zero, the method proceeds in step S14, otherwise the balance flag Cell_BalActive is set to "false" and proceeds in step S42.

In step S14, the cell index UID of the maximum capacitance cell in the energy storage modules 12 is determined. The cell index UID is a unique ID that is generally assigned when the system is set up and identifies a specific energy storage cell 14 within the energy storage system 10.

In step S16, a cell voltage target Cell_VoltTarget_V is determined. The cell voltage target is indicative of the cell voltage that is needed so that the cell is completely discharged to 0 V. The cell voltage target Cell_VoltTarget_V is calculated according to

$$\text{Cell\_VoltTarget\_V} = 0 - (\text{Cell\_CapMean\_F} / \text{Cell\_Cap\_F}) * (0 - \text{Cell\_VoltMean\_V})$$

where

Cell_VoltTarget_V is the cell voltage target;
Cell_CapMean_F is the mean of the capacitance of all energy storage cells 14 of the energy storage system 10 determined according to Equation (3);
Cell_Cap_F is the capacitance of the specific energy storage cell 14 with cell index UID; and
Cell_VoltMean_V is the mean of the current cell voltages of all energy storage cells 14 of the energy storage system 10 determined according to Equation (4).

In step S18, a cell counter N is initialized as N = 1. The cell counter N keeps track of the number of energy storage cells 14 that have undergone analysis as described in the following.

In step S20, a first criterion C1 is checked. The first criterion C1 checks, whether the current cell voltage Cell_Volt_V is greater than the nominal cell voltage Cell_VoltNom_V. If true, the balance flag Cell_BalActive is set to "true", thereby indicating that this specific energy storage cell 14 takes part in balancing and the method goes to step S38. Otherwise, the method goes to step S22.

In step S22, a second criterion C2 is checked. The second criterion C2 checks, whether the current cell voltage Cell_Volt_V is smaller than the cell minimum balancing voltage Cell_VoltBalMin_V. The cell minimum balancing voltage Cell_VoltBalMin_V indicates the voltage below which a balancing of the energy storage cell 14 is technically not possible. As the balancing method used herein is passive balancing using shunt resistors, the energy storage cells 14 can be individually discharged but not individually charged. Thus, energy storage cells 14 below a certain threshold, i.e. below the cell minimum balancing voltage, are removed from the cell balancing step.

If the second criterion C2 is true, the balance flag Cell_BalActive is set to "false", thereby indicating that this energy storage cell 14 does not take part in balancing and the method goes to step S38. Otherwise the method proceeds with step S24.

In step S24, a third criterion C3 is checked. The third criterion C3 checks, whether the current cell voltage Cell_Volt_V is greater than the cell voltage target Cell_VoltTarget_V that was previously calculated. If true, the balance flag Cell_BalActive is set to "true" and the method proceeds to step S38. Otherwise the method proceeds in step S26.

In step S26, a fourth criterion C4 is checked. The fourth criterion C4 checks, if any of the cell target voltage Cell_VoltTarget_V is above the current cell voltage Cell_Volt_V and if the calculated cell voltage after discharge Cell_VoltDchg_V of the energy storage cell 14 with maximum capacitance, i.e. of the maximum capacitance cell Cell_NumOfCapMax, is greater than 0. If both these conditions are met, the fourth criterion C4 is true and the method proceeds to step S28. Otherwise, the method proceeds to step S30.

In step S28, a fifth criterion C5 is checked. The fifth criterion C5 checks, if the energy storage cell 14 that is currently under analysis is the maximum capacitance cell Cell_NumOfCapMax. If true, the balance flag Cell_BalActive of the maximum capacitance cell Cell_NumOfCapMax is set to "true". Otherwise the balance flag is maintained as it currently is. In both cases, the method proceeds further to step S38. The fourth and fifth criteria C4, C5 allow an increase in the cell voltages with passive balancing by discharging the maximum capacity cell.

In step S30, a sixth criterion C6 is checked. The sixth criterion C6 checks, whether the cell voltage after discharge Cell_VoltDchg_V is greater than 0. If true, the balance flag Cell_BalActive is set to "true" and the method proceeds to step S38. Otherwise the method proceeds to step S32.

In step S32, a seventh criterion C7 is checked. The seventh criterion C7 checks, if the minimum of the calculated cell voltages after discharge Cell_VoltDchg_V is below an allowed negative cell voltage Cell_VoltNegAllowed_V and if at least one of the energy storage cells 14 is below the allowed negative cell voltage Cell_VoltNegAllowed_V. The allowed negative cell voltage Cell_VoltNegAllowed_V is typically dependent on the type of energy storage cell 14 and known from experience or experiment. If the seventh criterion C7 is true the method proceeds to step S34. Otherwise the balance flag Cell_BalActive is set to "false" and the method proceeds to step S38.

In step S34, a cell balancing coefficient Cell_BalCoeff is determined according to

$$\text{Cell\_BalCoeff} = (\text{Cell\_VoltDchg\_V} - \min(\text{Cell\_VoltDchg\_V})) / (\max(\text{Cell\_VoltDchg\_V}) - \min(\text{Cell\_VoltDchg\_V}))$$

where

Cell_BalCoeff is the cell balancing coefficient;
Cell_VoltDchg_V is the calculated voltage after discharge;
$\min(X)$ is the minimum of a collection X of values; and
$\max(X)$ is the maximum of a collection X of values.

The cell balancing coefficient Cell_BalCoeff is preferably a number in the interval from 0 to 1 and indicates, whether an energy storage cell 14 requires balancing.

In step S36, the cell balance coefficient Cell_BalCoeff is checked, whether it is above a predetermined threshold, such as 0.95. If true, then the balance flag Cell_BalActive is set to "true". Otherwise the balance flag Cell_BalActive is set to "false". In any case, the method proceeds further to step S38.

In step S38, the cell counter N is incremented by 1 and the method proceeds to step S40. In step S40 the cell counter N is checked, if it is greater than the total number $N_{sys}$ of energy storage cells 14 in the energy storage system 10. If false, the method goes back to step S20 and is repeated for the next energy storage cell 14. If true, the method proceeds to step S42.

In step S42, the balancing map is compiled for the energy storage system 10. The balancing map includes the cell index UID and associated therewith at least the respective balance flag Cell_BalActive, and the calculated cell voltages after discharge Cell_VoltDchg_V. The method proceeds further to step S44.

In step S44, the minimum of the calculated cell voltages after discharge Cell_VoltDchg_V is determined and compared with the allowed negative cell voltage Cell_VoltNegAllowed_V. If the minimum Cell_VoltDchg_V is greater than or equal to Cell_VoltNegAllowed_V, the system discharge ready flag Sys_Dchg0VReady is set to true, otherwise it is set to false.

If the system discharge ready flag Sys_Dchg0VReady is true the energy storage system 10 gets discharged. Otherwise there is no discharge and the previously described method gets repeated in a next cycle.

With this method the energy storage cells 14 can be safely discharged to 0V without significant degradation of the energy storage cells 14.

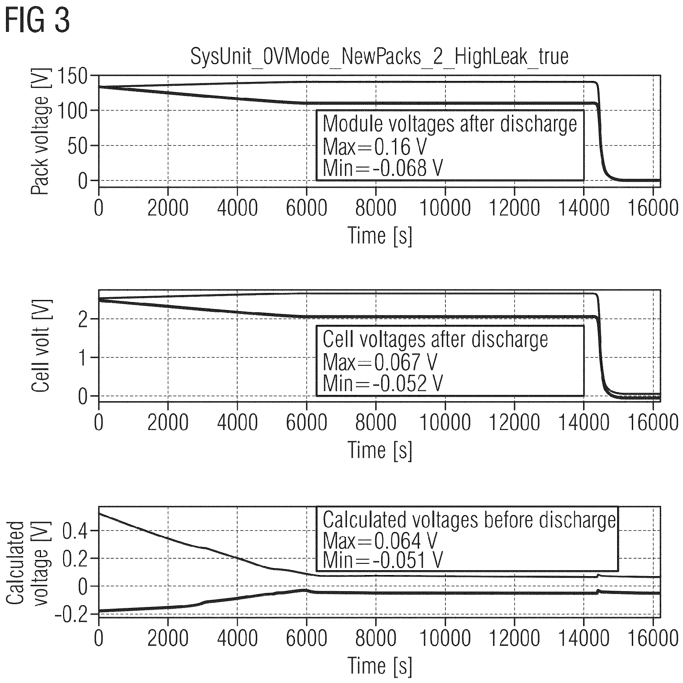

Fig. 3 to Fig. 5 illustrate different cases that are simulated based on the following model. The energy storage system 10 is configured as 5s2p rack. There is one high leakage cell. There is a 10 minute discharge (t_dchg) with a resistor based on t_dchg = 5 RC (where RC is the product of capacitance with resistance). The full discharge is at t = 4 h. The voltage and capacitance errors are modeled as being normally distributed, and the voltage error is a few millivolts and capacitance error is less than 3%. The allowed negative cell voltage Cell_VoltNegAllowed_V = -0.05 V.

Fig. 3 illustrates results for Case 1 with production tolerances for other cells state of health (SoH) variation from 0 % to 10 % with mean SoH value of 5 %. Case 1 has eight modules in total, where one of the parallel assemblies has new modules and the rest of the eight modules where the ones with SoH from 0 % to 10 %.

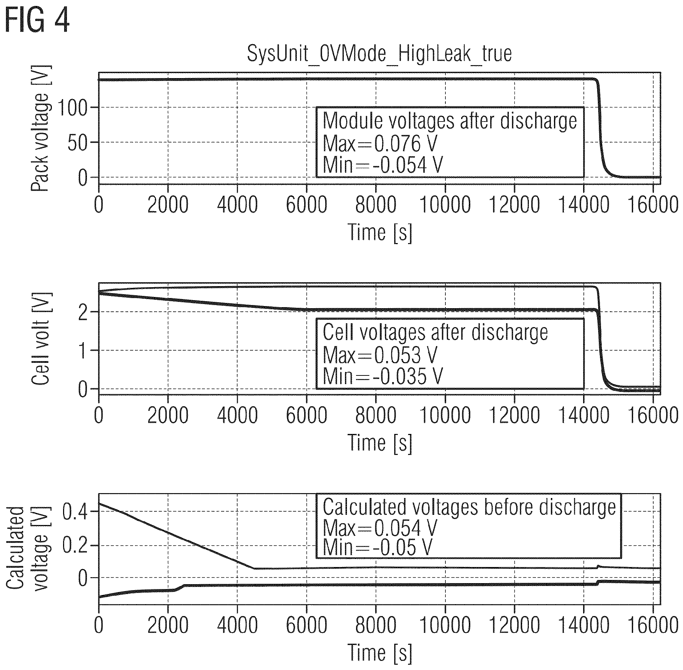

Fig. 4 illustrates the results for Case 2 which has a cell SoH variation from 0 % to 100 % SoH with a mean SoH value of 50 %.

In both cases, the difference between cell voltages after discharge has been reduced with the disclosed method, called here "0VMode", from previously about 660 mV (done with weighted balancing) to about 120 mV (invention). The biggest difference can be seen in module voltages in Case 1 where the difference between module voltage is reduced from about 30 V to less than 0.3 V, by a factor of 100 (!). Minimum cell voltage changes from -0.165 V to -0.052 V and minimum module voltage from -6.093 V to -0.068 V. Thus, the disclosed method is able to significantly reduce the voltage discrepancies in the energy storage system 10 thereby mitigating degradation and other adverse effects on the energy storage cells 14 during complete discharge.

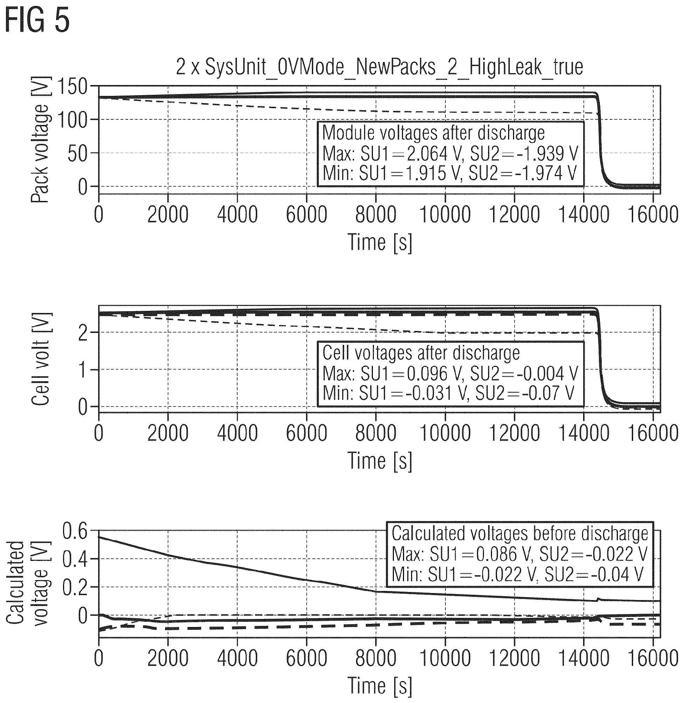

Fig. 5 illustrates Case 1 where it is simulated with two system units in series. The term "system unit" as used herein designates a collection of a system MCU and up to ten energy storage modules that are connected in series and/or in parallel. The only difference is an additional 5s2p rack with cells SoH variation from 0 % to 10 % with a mean SoH value of 5 %. For weighted balancing a simplistic system-level balancing method is used.

The cell voltage difference between system units changes from 650 mV to 165 mV with maximum negative voltage changing from -132 mV to -70 mV. This is similar to one system unit results. With module voltages, the difference changes from ~30 V to ~4 V with maximum negative voltage changing from -4.55 V to - 1.94 V.

Overall the simulations confirm that the disclosed method has a significant effect on the cell voltages during complete discharge and that degradation and other adverse effects can be reduced due to the changed voltages.

List of reference signs:

| | |
|---|---|
| 10 | energy storage system |
| 12 | energy storage module |
| 14 | energy storage cell |
| 16 | positive terminal |
| 18 | negative terminal |
| 20 | module MCU |
| 22 | system MCU |

| | |
|---|---|
| C1 | first criterion |
| C2 | second criterion |
| C3 | third criterion |
| C4 | fourth criterion |
| C5 | fifth criterion |
| C6 | sixth criterion |
| C7 | seventh criterion |

| | |
|---|---|
| Cell_BalActive | balance flag |
| Cell_BalCoeff | cell balancing coefficient |
| Cell_Cap_F | capacity |
| Cell_CapMean_F | mean capacitance ($C_{avg}$) |
| Cell_NumOfCapMax | maximum capacitance cell |
| Cell_Volt_V | current cell voltage |
| Cell_VoltBalMin_V | cell minimum balancing voltage |
| Cell_VoltDchg_V | calculated cell voltage after discharge |
| Cell_VoltMean_V | current cell voltage mean ($V_{avg}$) |
| Cell_VoltNegAllowed_V | allowed negative cell voltage |
| Cell_VoltNom_V | nominal cell voltage |
| Cell_VoltTarget_V | cell voltage target |

| | |
|---|---|
| NumOfCell | cell counter (N) |
| PA1 | parallel assembly |
| PA2 | parallel assembly |

PA3        parallel assembly
PA4        parallel assembly
PA5        parallel assembly

Sys_charge_As      system charge ($Q_{sys}$)
Sys_Dchg0VReady    system discharge ready flag

UID   cell index

**Claims**

1. A computer-implemented method for balancing by discharging and/or discharging energy storage cells (14) of an energy storage system (10), the method comprising:

   a) determining a system charge, Sys_charge_As, to be discharged from the energy storage cells (14) based on a configuration of the energy storage system (10);
   b) determining a balancing map based on predefined criteria, wherein the balancing map includes an entry for each energy storage cell (14), and each energy storage cell (14) is associated with at least a balancing flag;
   c) determining, whether the energy storage system (10) is ready to discharge; and
   d) discharging the energy storage system (10), if the energy storage system (10) is determined to be ready for discharge.

2. The method of claim 1, wherein in step a) determining the system charge, Sys_charge_As, to be discharged involves determining the system configuration by determining the number of series and parallel-connected modules.

3. The method for any of the preceding claims, wherein in step b) determining the balancing map involves determining any of a calculated cell voltage after discharge, Cell_VoltDchg_V, and a target cell voltage, Cell_VoltTarget_V, that is indicative of the voltage where each energy storage cell (14) has stored the same amount of charge.

4. The method for any of the preceding claims, wherein in step b) a first criterion C1 involves checking if a current cell voltage, Cell_Volt_V, is greater than a nominal cell voltage, Cell_VoltNom_V, wherein, when the first criterion C1 is true, the balance flag, Cell_BalActive, is set to "true", and otherwise another criterion, is checked.

5. The method for any of the preceding claims, wherein in step b) a second criterion C2 involves checking if the current cell voltage, Cell_Volt_V, is smaller than a cell minimum balancing voltage, Cell_VoltBalMin_V, that indicates the voltage below which a balancing of the energy storage cell (14) is technically not possible, wherein, when the second criterion C2 is true, the balance flag, Cell_BalActive, is set to "false", and otherwise another criterion is checked.

6. The method for any of the preceding claims, wherein in step b) a third criterion C3 involves checking if the current cell voltage, Cell_Volt_V, is greater than a cell voltage target, Cell_VoltTarget_V, wherein, when the third criterion C3 is true, the balance flag, Cell_BalActive, is set to "true", and otherwise another criterion is checked.

7. The method of any of the preceding claims, wherein in step b) a fourth criterion C4 involves checking if any of the cell target voltage, Cell_VoltTarget_V, is above the current cell voltage, Cell_Volt_V, and if the calculated cell voltage after discharge, Cell_VoltDchg_V, of a maximum capacitance cell, Cell_NumOfCapMax, is greater than a predetermined threshold, wherein a fifth criterion C5 involves checking, if the respective energy storage cell (14) is the maximum capacitance cell Cell_NumOfCapMax, wherein the fifth criterion C5 is checked if the fourth criterion C4 is true, and otherwise another criterion is checked.

8. The method of any of the preceding claims, wherein in step b) a sixth criterion C6 involves checking if the cell voltage after discharge, Cell_VoltDchg_V, is greater than a predetermined threshold, wherein, when the sixth criterion C6 is true, the balance flag, Cell_BalActive, is set to "true", and otherwise another criterion is checked.

9. The method of any of the preceding claims, wherein in step b) a seventh criterion C7 involves checking, if the minimum of the calculated cell voltages after discharge, Cell_VoltDchg_V, is below an allowed negative cell voltage, Cell_VoltNegAllowed_V, and if at least one of the energy storage cells (14) is below the allowed negative cell voltage, Cell_VoltNegAllowed_V.

10. The method of any of the preceding claims, wherein in step d) discharging involves a passive balancing method using switched shunts, allowing each cell to be balanced separately according to the balancing map.

11. A microcontroller (MCU) comprising means to perform a method of any of the preceding claims.

12. An energy storage module (12) comprising a module-level microcontroller (MCU) (20) configured according to claim 17 and a plurality of energy storage cells (14) that are operated by the module-level MCU (20), wherein each energy storage cell (14) includes a switched shunt, that is allowing each cell to be balanced separately according to the balancing map.

13. An energy storage system (10) comprising a plurality of energy storage modules (12) and a system-level microcontroller (MCU) (22) that is preferably configured according to claim 11, wherein the system-level MCU (22) and the respective module-level MCUs (20) are in communication with each other, preferably such that the system-level MCU (22) controls each module-level MCU (20), and wherein the energy storage cells (14) are electrically connected in series or in parallel.

14. A machine-readable data storage that includes instructions, that upon execution by a computer or microcontroller cause the computer or microcontroller to perform a method of any of the claims 1 to 10, or that upon synthesizing in a programmable circuit chip, configure the circuit chip to perform a method of any of the claims 1 to 10.

FIG 1

10

22

16 +

12 → 14 ⸗ | 20 | 20 | PA 1 | ⸗ 14 | ← 12

12 → 14 ⸗ | 20 | 20 | PA 2 | ⸗ 14 | ← 12

12 → 14 ⸗ | 20 | 20 | PA 3 | ⸗ 14 | ← 12

12 → 14 ⸗ | 20 | 20 | PA 4 | ⸗ 14 | ← 12

12 → 14 ⸗ | 20 | 20 | PA 5 | ⸗ 14 | ← 12

System voltage and capacitance

18 −

# FIG 2

| FIG 2A |
|--------|
| FIG 2B |

# FIG 2A

Start → Calculate Cell_VoltDchg_V=Cell_Volt_V· Sys_Charge_As/Cell_Cap_F ⟶ S10 → max(abs(Cell_VoltDchg_V))>0 — No

Calculate Cell_VoltTarget_V=0·(Cell_CapMean_F/ Cell_Cap_F)*(0·Cell_VoltMean_V) ← Find index (Cell_NumOfCapMax) of maximum capacitance in the module ← Yes  S12

S18 → NumOfCell=1    S16    S14

Cell_BalActive =false

**S20**  Cell_Volt_V > Cell_VoltNom_V — C1 — Yes → Cell_BalActive=true

No

**S22**  Cell_Volt_V < Cell_VoltBalMin_V — C2 — Yes → Cell_BalActive=false

No

**S24**  Cell_Volt_V > Cell_VoltTarget_V — C3 — Yes → Cell_BalActive=true

No

**S26**  and(any(Cell_ VoltTarget_V > Cell_Volt_V), Cell_VoltDchg_V(Cell_NumOfCap Max) > 0) — C4 — Yes → **S28** NumOfCell== Cell_NumOfCapMax — C5 — Yes → Cell_BalActive (Cell_NumOfCapMax)=true

No    No

EP 4 734 325 A1

13

FIG 2B

EP 4 734 325 A1

## FIG 3

SysUnit_0VMode_NewPacks_2_HighLeak_true

Module voltages after discharge
Max=0.16 V
Min=-0.068 V

Cell voltages after discharge
Max=0.067 V
Min=-0.052 V

Calculated voltages before discharge
Max=0.064 V
Min=-0.051 V

## FIG 4

SysUnit_OVMode_HighLeak_true

Module voltages after discharge
Max=0.076 V
Min=-0.054 V

Cell voltages after discharge
Max=0.053 V
Min=-0.035 V

Calculated voltages before discharge
Max=0.054 V
Min=-0.05 V

FIG 5

2 x SysUnit_0VMode_NewPacks_2_HighLeak_true

Module voltages after discharge
Max: SU1=2.064 V, SU2=-1.939 V
Min: SU1=1.915 V, SU2=-1.974 V

Cell voltages after discharge
Max: SU1=0.096 V, SU2=-0.004 V
Min: SU1=-0.031 V, SU2=-0.07 V

Calculated voltages before discharge
Max: SU1=0.086 V, SU2=-0.022 V
Min: SU1=-0.022 V, SU2=-0.04 V

Europäisches
Patentamt
European
Patent Office
Office européen
des brevets

# EUROPEAN SEARCH REPORT

**Application Number**

EP 25 21 1051

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/366959 A1 (COENEN PETER [BE]) 20 December 2018 (2018-12-20) * page 145 – paragraph 223 * | 1-14 | INV. H02J7/00 |
| A | US 2017/358932 A1 (KLEFFEL RÜDIGER [DE] ET AL) 14 December 2017 (2017-12-14) * figures 1-2 * | 1-14 | |
| A | MASATOSHI UNO ET AL: "Electric double-layer capacitor module with series-parallel reconfigurable cell voltage equalizers", ELECTRICAL ENGINEERING IN JAPAN, JOHN WILEY & SONS, INC, US, vol. 181, no. 4, 23 August 2012 (2012-08-23), pages 38-50, XP071651165, ISSN: 0424-7760, DOI: 10.1002/EEJ.21287 * Section 2 * | 1-14 | |

**TECHNICAL FIELDS SEARCHED (IPC)**

H02J

The present search report has been drawn up for all claims

| Place of search | Date of completion of the search | Examiner |
|---|---|---|
| Munich | 23 February 2026 | Chabas, Julien |

EPO FORM 1503 03.82 (P04C01)

## EP 4 734 325 A1

### ANNEX TO THE EUROPEAN SEARCH REPORT
### ON EUROPEAN PATENT APPLICATION NO.

EP 25 21 1051

This annex lists the patent family members relating to the patent documents cited in the above-mentioned European search report.
The members are as contained in the European Patent Office EDP file on
The European Patent Office is in no way liable for these particulars which are merely given for the purpose of information.

23-02-2026

| Patent document cited in search report | Publication date | Patent family member(s) | | Publication date |
|---|---|---|---|---|
| US 2018366959 A1 | 20-12-2018 | CA | 3007612 A1 | 29-06-2017 |
| | | CN | 108432083 A | 21-08-2018 |
| | | EP | 3394950 A1 | 31-10-2018 |
| | | ES | 3036519 T3 | 19-09-2025 |
| | | JP | 2019501616 A | 17-01-2019 |
| | | PL | 3394950 T3 | 01-09-2025 |
| | | US | 2018366959 A1 | 20-12-2018 |
| | | WO | 2017109226 A1 | 29-06-2017 |
| US 2017358932 A1 | 14-12-2017 | CN | 107004514 A | 01-08-2017 |
| | | DK | 3224894 T3 | 02-01-2020 |
| | | EP | 3026750 A1 | 01-06-2016 |
| | | EP | 3224894 A1 | 04-10-2017 |
| | | ES | 2763550 T3 | 29-05-2020 |
| | | US | 2017358932 A1 | 14-12-2017 |
| | | WO | 2016083223 A1 | 02-06-2016 |

EPO FORM P0459

For more details about this annex : see Official Journal of the European Patent Office, No. 12/82

19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20220149447 A1
- US 20210013729 A1
- EP 2437344 A1
- US 9641006 B2
- US 5789903 A
- US 5547775 A
- EP 4597787 A2
- DE 102024102852
- US 20180366959 A1
- US 20170358932 A1